# EUROPÄISCHE PATENTSCHRIFT

(11) **EP 0 528 832 B1**
(45) Veröffentlichungstag und Bekanntmachung des Hinweises auf die Patenterteilung: **07.09.1994**
(21) Anmeldenummer: 91908224.8
(22) Anmeldetag: 26.04.1991
(51) Int. Cl.: B60R 21/00

(54) **SICHERHEITSEINRICHTUNG AN EINEM KRAFTFAHRZEUG**
SAFETY DEVICE IN A MOTOR VEHICLE
DISPOSITIF DE SECURITE POUR VEHICULE AUTOMOBILE

(30) Priorität: 23.05.1990 DE 4016611
(43) Veröffentlichungstag der Anmeldung: 03.03.1993
(73) Patentinhaber: AUDI AG, 85045 Ingolstadt (DE)
(72) Erfinder: VOLLMER, Elmar, D-8071 Wettstetten (DE)
(74) Vertreter: Engelhardt, Harald
(86) Internationale Anmeldenummer: EP9100805
(87) Internationale Veröffentlichungsnummer: WO9117907

(56) Entgegenhaltungen:
- DE-A- 3 312 769
- DE-A- 3 716 168
- US-A- 4 643 944
- RESEARCH DISCLOSE, Nr. 268, August 1986, (Elmsworth, Hampshire, GB), "Windshield Release System", Mitteilung Nr. 26846, Seite 474

## Beschreibung

Die Erfindung betrifft eine Sicherheitseinrichtung an einem Kraftfahrzeug nach dem Oberbegriff des Anspruchs 1.

Bei einem schwereren Unfall mit einem stärkeren Aufprall eines Fahrzeugs prallt üblicherweise auch der Kopf eines Fahrzeuginsassen gegen Fahrzeugteile. Das Verletzungsrisiko ist dabei umso geringer, je nachgiebiger und weicher der Kopf aufgefangen wird.

Zur Verringerung des Verletzungsrisikos ist beispielsweise eine über Sensoren betätigbare Gaskisseneinrichtung bekannt, die sich bei einem Aufprall schlagartig vor einem Fahrzeuglenker aufbläst und den Kopf weich und nachgiebig abfängt. Eine solche Einrichtung wirkt aber im wesentlichen nur bei einem Frontalaufprall.

Bei einem Seitenaufprall schlägt der Kopf dagegen oft ungeschützt gegen eine Seitenscheibe, wodurch erhebliche Kopfverletzungen verursacht werden können, da das Sicherheitsglas der Seitenscheibe normalerweise durch den stumpfen Kopfaufprall nicht zerspringt und eine starre, unnachgiebige Wand bildet.

Es ist bereits bekannt, einen Notausstieg für Fahrzeuginsassen durch Zerschlagen von Sicherheitsscheiben eines Fahrzeugs zu öffnen. Dazu sind Sicherheitshämmer zum Zerschlagen der Sicherheitsscheiben im Bereich möglicher Fensterausstiege in Halterungen ausreißbar angebracht. Solche Sicherheitshämmer sind insbesondere in Eisenbahnwaggons und in Bussen vorgesehen. Ein schnelles Zerschlagen einer Scheibe während eines Unfalls vor einem Kopfaufprall ist damit nicht möglich.

Die Aufgabe der Erfindung wird darin gesehen, eine Sicherheitseinrichtung an einem Kraftfahrzeug zu schaffen, mit der das Risiko einer Kopfverletzung bei einem Seitenaufprall verringert wird.

Diese Aufgabe wird mit den Merkmalen des Anspruchs 1 gelöst.

Gemäß Anspruch 1 sollen die Seitenscheiben aus vorgespanntem Sicherheits-Verbundglas mit einer eingearbeiteten Zwischenkunststoff-Folie bestehen. Am Kraftfahrzeug sind Mittel zur Erfassung eines Seitenaufpralls vorgesehen sowie eine im Bereich wenigstens einer Seitenscheibe angebrachte Schlageinrichtung. Diese ist von den Mitteln zur Erfassung des Seitenaufpralls aktivierbar und nimmt durch ein definiertes Anschlagen mit Bruchfolge bei einem Seitenaufprall der Seitenscheibe ihren Spannungszustand, wodurch diese in einen in viele Einzelteile gebrochenen Glaszustand übergeht.

Die Mittel zur Erfassung des Seitenaufpralls sprechen sofort bei einem Seitenaufprall an und aktivieren sofort die Schlageinrichtung. Dieser Vorgang zusammen mit der Bruchausbildung im Glas ist so schnell, daß der gebrochene Glaszustand im Bereich des Kopfkontakts vor dem Kopfaufschlag bereits vorliegt. Im gebrochenen Glaszustand ist die Seitenscheibe keine starre Wand mehr, sondern nachgiebig. Je nach Ausbildung und Dimensionierung der Zwischenkunststoff-Folie läßt sich die Nachgiebigkeit und damit das Verzögerungsniveau für einen Kopfaufschlag optimieren.

Die "Weichheit" und damit auch die von der Schlageinrichtung aufzubringende Brechkraft läßt sich bei vorgespanntem Verbundglas durch die Anzahl und Anordnungen der zu brechenden Glasschichten festlegen.

Durch das gezielte Überführen einer Seitenscheibe aus Sicherheits-Verbundglas in den gebrochenen Glaszustand bei einem Seitenaufprall wird der Kopfaufschlagbereich nachgiebig gestaltet und damit das Verletzungsrisiko reduziert.

Die Schlageinrichtung kann nach Anspruch 2 direkt an der Seitenscheibe angebracht sein, bevorzugt in einem unteren Randbereich, der durch eine Verkleidung oder Türfüllung verdeckt ist. Bei beweglichen Seitenscheiben wird somit die Schlageinrichtung zusammen mit den Seitenscheiben bewegt.

In einer anderen Ausführung nach Anspruch 3 ist eine Schlageinrichtung stationär innerhalb einer Verkleidung oder eines Türkörpers angeordnet, wobei bei beweglichen Scheiben sichergestellt werden muß, daß diese in jeder Stellung im Bereich der Schlageinrichtung verbleiben.

Nach Anspruch 4 ist die Schlageinrichtung vorteilhaft als Bolzenschußgerät ausgebildet, mit dem wenigstens ein spitzes Bolzenstück nach einer Aktivierung der Schlageinrichtung bzw. der Zündung einer pyrotechnischen Ladung auf die Seitenscheibe geschossen wird. Das Bolzenstück wird bevorzugt als Metallzylinder mit einer gehärteten Kegelspitze ausgebildet.

Nach Anspruch 5 ist das Bolzenstück an einer Seite einer in einem Metallkörper eingebrachten und auf die Seitenscheibe gerichteten Bohrung lösbar gehalten. Die andere Bohrungsseite ist verschlossen und im Bohrungsbereich eine pyrotechnische Ladung mit einer Zündpille angebracht. Die Zündung der pyrotechnischen Ladung erfolgt elektrisch, so daß hier Aufprallsensoren mit elektrischem Ausgang erforderlich sind. Eine solche Anordnung eignet sich gut zum direkten Anbringen an der Seitenscheibe, aber ebenso für eine stationäre Anbringung, beispielsweise an einem Türkörper.

In einer anderen Ausführungsform nach Anspruch 6 kann aber die Schlageinrichtung bzw. wenigstens ein darin enthaltenes, spitzes Bolzenstück von den Mitteln zur Erfassung des Seitenaufpralls auch direkt mechanisch betätigt werden.

Es sind dazu starre Hebelübersetzungen oder Seilzüge verwendbar. Nach Anspruch 7 ist es jedoch vorteilhaft, eine direkte Betätigung hydraulisch durchzuführen, wobei jeweils ein Bolzenstück das Ende einer auf die Seitenscheibe zu gerichteten Hydraulikleitung lösbar verschließt. Bei einem Druckanstieg in der Hydraulikleitung wird dann das Bolzenstück schlagartig freigegeben und auf die Seitenscheibe geschossen.

Als Mittel zur Erfassung eines Seitenaufpralls sind nach Anspruch 8 an sich bekannte Beschleunigungsaufnehmer verwendbar, die einen elektrischen Schaltausgang aufweisen und beispielsweise zur Zündung der vorstehend genannten, pyrotechnischen Ladung geeignet sind. Nachfolgend wird jedoch eine andere, vorteilhafte Sensorausbildung, die den direkten Aufprallkontakt benutzt, beschrieben.

Als Mittel zur Erfassung des Seitenaufpralls wird nach Anspruch 9 eine Sensorkammer vorgeschlagen, die langgestreckt und flüssigkeitsgefüllt an der Fahrzeugseite in Längsrichtung in einem möglichen Aufprallbereich verläuft. Bei einem Seitenaufprall wird dann die Sensorkammer zusammengedrückt und durch die Volumenreduzierung der Druck in der Flüssigkeit erhöht und als auswertbares Signal erfaßt. Eine solche Sensoreinrichtung ist einfach aufgebaut und funktionssicher. Fehlauslösungen sind praktisch nicht möglich.

Nach Anspruch 10 wird die Sensorkammer vorteilhaft als Teil eines Aufprallträgers ausgeführt, der eine bestimmte Festigkeit und ein vorgegebenes Ansprechverhalten auf Biegung aufweist. Insbesondere kann ein solcher Aufprallträger eine seitliche Türleitplanke aus einem beiderseits verschlossenen Strangpreßprofil sein. Ein solcher Aufprallträger kann dabei als Rammschutzleiste an der Türaußenseite verlaufen oder auch innerhalb des Türkörpers angeordnet sein.

Die im Zusammenhang mit den Ansprüchen 9 und 10 beanspruchte Sensorkammer hat zudem den Vorteil, daß sie Bestandteil eines Hydrauliksystems sein kann, bei dem über Hydraulikleitungen die bei einem Aufprall aus der Sensorkammer verdrängte Hydraulikflüssigkeit direkt die Schlageinrichtung betätigen kann (Anspruch 11). Damit ergibt sich eine sehr einfache, kostengünstige und funktionssichere Ausführung einer Sicherheitseinrichtung.

Nach Anspruch 12 ist es aber auch ohne weiteres möglich, die Sensorkammer mit einem Ausdehnungselement zu verbinden, wobei bei einem Aufprall die aus der Sensorkammer verdrängte Flüssigkeit auf das Ausdehnungselement wirkt und dieses einen elektrischen Kontakt schließt. Darüber kann beispielsweise die pyrotechnische Ladung des Bolzenschußgeräts nach Anspruch 4 gezündet werden.

Als Ausdehnungselement kann nach Anspruch 13 einfach ein in die Sensorkammer ragender, geführter, kleiner Hydraulikkolben verwendet werden.

Nach Anspruch 14 können vorteilhaft die aufgezeigten Mittel zur Erfassung des Seitenaufpralls auch zur Aktivierung eines im seitlichen Kopfaufschlagbereich aufblasbaren, an sich bekannten Gassacks, verwendet werden. Dieser Gassack kann zusätzlich zu der Schlageinrichtung für das Brechen der Seitenscheibe verwendet werden oder auch anstelle dieser Einrichtung.

Anhand einer Zeichnung werden Ausführungsbeispiele der Erfindung mit weiteren Einzelheiten, Merkmalen und Vorteilen näher erläutert.

Es zeigen
- Fig. 1: eine schematische Seitenansicht einer Fahrzeugtür,
- Fig. 2: einen Schnitt durch die Fahrzeugtür nach Fig. 1 entlang der Linie A-A,
- Fig. 3: eine schematische, vergrößerte Darstellung der Bereiche X und Y aus Fig. 2,
- Fig. 4: einen Querschnitt durch einen Aufprallträger mit einer Sensorkammer entlang der Linie B-B aus Fig. 1,
- Fig. 5: einen Querschnitt an einer anderen Stelle des Aufprallträgers mit einem Ausdehnungselement und Kontaktschalter entlang der Linie C-C aus Fig. 1,
- Fig. 6: einen Schnitt durch eine Fahrzeugtür mit einer anderen, direkt hydraulisch betätigten Ausführungsform einer Schlageinrichtung,
- Fig. 7: eine vergrößerte Darstellung des Bereichs Z aus Fig. 6.

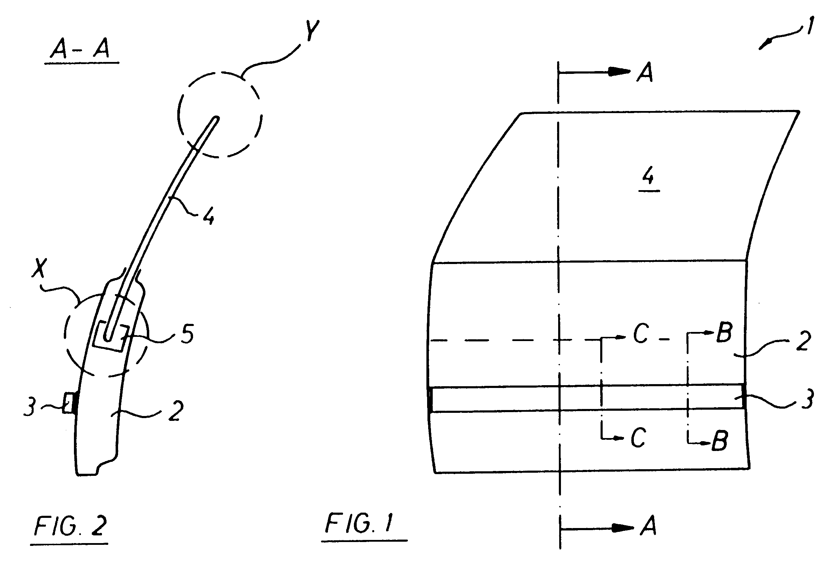

In Fig. 1 ist die Seitenansicht einer Fahrzeugtür 1 dargestellt mit einem Türkörper 2, an dem eine nach außen vorstehende Türleitplanke als Aufprallträger 3 angebracht ist und in dem eine Seitenscheibe 4 beweglich geführt ist. Die Seitenscheibe 4 ragt auch im geschlossenen, oberen Zustand mit ihrem unteren Rand in den Türkörper 2, wie dies strichliert angedeutet ist.

Das Glas der Seitenscheibe besteht aus einem vorgespannten Sicherheits-Verbundglas mit einer eingearbeiteten Zwischenkunststoff-Folie.

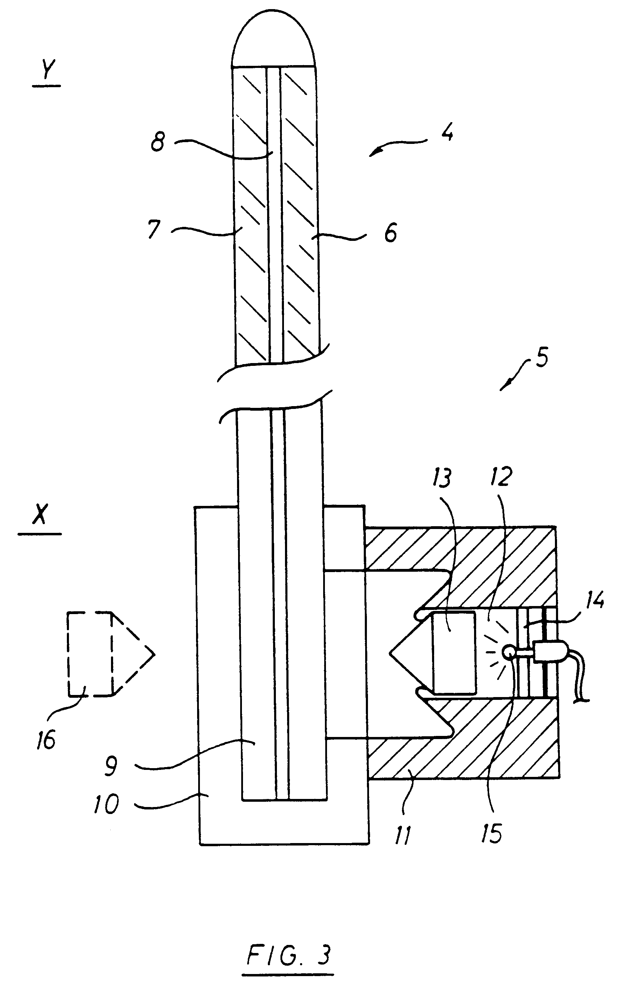

Aus der Schnittdarstellung nach Fig. 2 sind wiederum der Türkörper 2, der Aufprallträger 3 und die Seitenscheibe 4 zu entnehmen. Am unteren Rand und mit der Seitenscheibe 4 fest verbunden ist eine Schlageinrichtung 5 angebracht (Bereich X), die in Fig. 3 vergrößert und mit weiteren Einzelheiten dargestellt ist.

Weiter ist in Fig. 3 der obere Bereich der Seitenscheibe (Bereich Y) vergrößert im Schnitt dargestellt. Dort ist schematisch der Aufbau einer Sicherheits-Verbundglasscheibe mit einer ersten Glasschicht 6 und einer zweiten Glasschicht 7 dargestellt, die über eine Zwischenkunststoff-Folie 8 verbunden sind. Das Sicherheits-Verbundglas ist vorgespannt und zerspringt bei einem Anschlagen mit Bruchfolge in kleine Einzelteile, die aber durch die Zwischenkunststoff-Folie 8 zusammengehalten werden.

Im unteren Bereich der Fig. 3 ist die Schlageinrichtung 5 gezeigt mit einem am unteren Scheibenrand 9 angebrachten Verbindungsteil 10 und einem Metallkörper 11 mit einer auf den Scheibenrand 9 zu gerichteten Bohrung 12. Das eine Ende der Bohrung 12 ist durch ein Bolzenstück 13 mit vorstehender, kegeliger Spitze verschlossen. Das andere Ende der Bohrung 12 ist durch eine Platte 14 verschlossen, die innerhalb der Bohrung 12 eine pyrotechnische Ladung mit einer Zündpille 15 trägt und durch die die Zündleitung geführt ist. Diese Ausführung einer Schlageinrichtung ist somit als Bolzenschußgerät ausgebildet. Mit dem strichliert gezeichneten Bolzenstück 16 soll angedeutet werden, daß ein solches Bolzenschußgerät auch stationär an der Innenseite des Türkörpers angebracht sein kann, ohne daß es durch eine Verbindung mit dem Scheibenrand 9 mit der Seitenscheibe 4 mitbewegt wird.

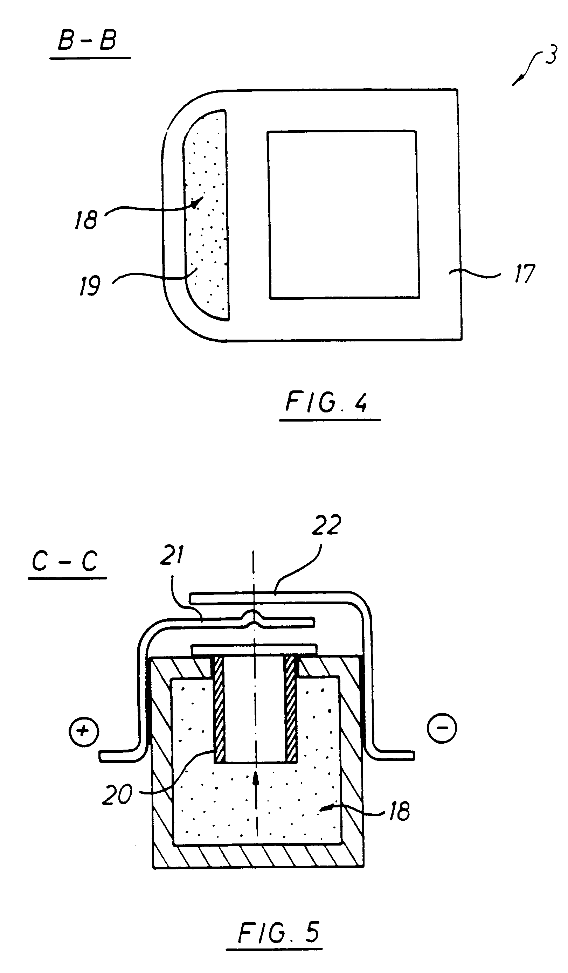

In Fig. 4 ist ein Querschnitt durch den Aufprallträger 3 dargestellt. Dieser ist ein Strangpreßprofil in Form eines Vierkantrohrs 17 mit einer an der Außenwand zusätzlich ausgebildeten, längs verlaufenden Sensorkammer 18. Die Sensorkammer 18 ist endseitig verschlossen und mit einer Flüssigkeit 19 gefüllt. Es ist eine Flüssigkeit zu verwenden, die nicht gefriert und einen nur geringen Temperaturgang aufweist.

An einer Stelle ist die Sensorkammer 18 etwa ausgebildet wie in Fig. 5 oder an ein entsprechendes Teil angeschlossen, wobei Fig. 5 lediglich eine schematische Funktionsdarstellung sein soll. In die Sensorkammer 18 bzw. an eine daran angeschlossene, weitere Kammer ragt ein Hydraulikkolben 20, der in der Kammerwand dicht geführt ist. In der Ausfahrrichtung des Hydraulikkolbens 20 liegt ein erster, beweglicher Elektrokontakt 21, der gegen einen zweiten, festen Elekrokontakt 22 bewegbar ist.

Die dargestellten Einrichtungen ergeben folgende Funktion: Bei einem stärkeren Seitenaufprall wird die Sensorkammer 18 eingedrückt und verformt, so daß die Flüssigkeit 19 verdrängt wird. Dieser Flüssigkeitsdruck wirkt auf den Hydraulikkolben 20, der herausgedrückt wird, auf den ersten Elektrokontakt 21 trifft und diesen zur Kontaktgabe mit dem zweiten Elektrokontakt 22 mitnimmt. Damit wird ein (nicht dargestellter) Stromkreis geschlossen.

Der geschlossene Stromkreis bewirkt die Zündung der Zündpille 15 an der Schlageinrichtung nach Fig. 3. Dadurch wird das Bolzenstück 13 mit seiner Spitze gegen den Scheibenrand 9 geschossen, wodurch die Seitenscheibe 4 in ihren gebrochenen Zustand überführt wird. Alle diese Vorgänge laufen sehr schnell ab, so daß bei einem Kopfaufschlag die Seitenscheibe bereits in ihrem gebrochenen Zustand angetroffen wird. Dadurch wird der Kopf entsprechend der Ausführung der Zwischenkunststoff-Folie 8 nachgiebig aufgefangen.

In einer weiteren Ausführungsform einer Schlageinrichtung 23 ist wiederum ein Aufprallträger 24 vorgesehen, der hier jedoch innerhalb des Türkörpers angebracht ist. Dieser Aufprallträger ist ebenfalls längsgestreckt und insgesamt mit Hydraulikflüssigkeit gefüllt. An zwei Schlauchanschlußstücken sind Hydraulikleitungen 25, 26 angeschlossen, die zu beiden Seiten der Seitenscheibe 4 enden und dort innerhalb des Türkörpers fixiert sind.

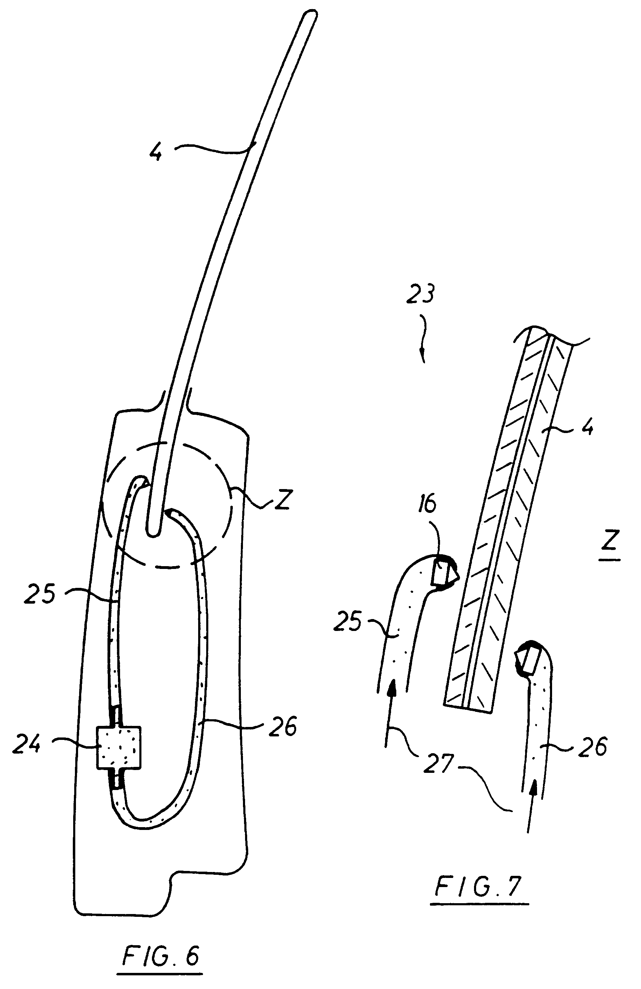

Aus der vergrößerten Darstellung in Fig. 7 ist zu ersehen, daß die Enden der Hydraulikleitungen 25, 26 mit Bolzenstücken 16 lösbar verschlossen sind.

Diese Ausführung hat folgende Funktion: Bei einem Seitenaufprall werden der Türkörper und damit der dahinterliegende Aufprallträger 24 verformt. Der Aufprallträger 24 wirkt somit insgesamt als Sensorkammer, aus der dann Flüssigkeit in die Hydraulikleitungen 25, 26 verdrängt wird (Pfeile 27). Bei einem vorbestimmten Druck werden die Bolzenstücke an den Enden der Hydraulikleitungen 25, 26 freigegeben und schlagartig auf den unteren Rand der Seitenscheibe 4 geschossen. Damit wird auch hier die Seitenscheibe 4 in den gebrochenen Zustand überführt und es werden die vorbeschriebenen, sicherheitstechnischen Vorteile für einen Insassen erreicht.

## Patentansprüche

1. Sicherheitseinrichtung an einem Kraftfahrzeug,
mit Seitenscheiben (4) aus vorgespanntem Sicherheits-Verbundglas mit einer eingearbeiteten Zwischenkunststoff-Folie (8),
dadurch gekennzeichnet,
daß am Kraftfahrzeug Mittel (18; 24) zur Erfassung eines Seitenaufpralls vorgesehen sind,
daß im Bereich wenigstens einer Seitenscheibe (4) eine Schlageinrichtung (5; 23) angebracht ist, die von den Mitteln (18; 24) zur Erfassung des Seitenaufpralls aktivierbar ist und die bei einem Seitenaufprall durch definiertes Anschlagen mit Bruchfolge der Seitenscheibe (4) ihren Spannungszustand nimmt, wodurch die Seitenscheibe (4) für einen Fahrzeuginsassen bei einem Kopfaufschlag entsprechend der Ausbildung der Zwischenkunststoff-Folie (8) nachgiebig wird.

2. Sicherheitseinrichtung nach Anspruch 1, dadurch gekennzeichnet, daß die Schlageinrichtung (5) direkt an der Seitenscheibe (4), insbesondere in einem durch eine Verkleidung verdeckten Randbereich (9), angebracht ist.

3. Sicherheitseinrichtung nach Anspruch 1, dadurch gekennzeichnet, daß die Schlageinrichtung (23) stationär innerhalb einer Verkleidung oder in einem Türkörper (2) angeordnet ist.

4. Sicherheitseinrichtung nach einem der Ansprüche 1 bis 3, dadurch gekennzeichnet, daß die Schlageinrichtung (5) als Bolzenschußgerät ausgebildet ist, mit dem wenigstens ein spitzes Bolzenstück (13) nach einer Aktivierung der Schlageinrichtung (5) bzw. Zündung einer pyrotechnischen Ladung (15) auf die Seitenscheibe (4) geschossen wird.

5. Sicherheitseinrichtung nach Anspruch 4, dadurch gekennzeichnet, daß das Bolzenstück (13) am einen Ende einer auf die Seitenscheibe (4) zu gerichteten Bohrung (12) in einem Metallkörper (11) lösbar gehalten ist und das Bolzenstück (13) die Bohrung (12) verschließt,
daß das andere Ende der Bohrung (12) fest verschlossen ist und
daß innerhalb der Bohrung (12) die pyrotechnische Ladung (15) angebracht ist.

6. Sicherheitseinrichtung nach einem der Ansprüche 1 bis 3, dadurch gekennzeichnet, daß die Schlageinrichtung (23) bzw. wenigstens ein darin enthaltenes, spitzes Bolzenstück (16) von den Mitteln zur Erfassung des Seitenaufpralls (Aufprallträger 24) direkt mechanisch betätigbar ist.

7. Sicherheitseinrichtung nach Anspruch 6, dadurch gekennzeichnet, daß das Bolzenstück (16) das Ende jeweils wenigstens einer auf die Seitenscheibe (4) zu gerichteten Hydraulikleitung (25, 26) lösbar verschließt und das bei einem Druckanstieg in der Hydraulikleitung (25, 26) auf die Seitenscheibe (4) abgeschossen wird.

8. Sicherheitseinrichtung nach einem der Ansprüche 1 bis 7, dadurch gekennzeichnet, daß als Mittel zur Erfassung des Seitenaufpralls ein an sich bekannter Beschleunigungsaufnehmer eingesetzt ist.

9. Sicherheitseinrichtung nach einem der Ansprüche 1 bis 7, dadurch gekennzeichnet, daß als Mittel zur Erfassung des Seitenaufpralls wenigstens eine langgestreckte, an der Fahrzeugseite in Längsrichtung in einem möglichen Aufprallbereich verlaufende, flüssigkeitsgefüllte Sensorkammer (18; Aufprallträger 24) angebracht ist und über den Druckanstieg in der Flüssigkeit (19) ein Seitenaufprall erkannt wird.

10. Sicherheitseinrichtung nach Anspruch 9, dadurch gekennzeichnet, daß die Sensorkammer (18) Teil eines Aufprallträgers (3), insbesondere eines Strangpreßprofils, ist, der ein gezieltes Ansprechverhalten aufweist.

11. Sicherheitseinrichtung nach Anspruch 9 oder 10, dadurch gekennzeichnet, daß die Sensorkammer (Aufprallträger 24) über Hydraulikleitungen (25, 26) direkt mit der Schlageinrichtung (23) für eine direkte, mechanische Betätigung verbunden ist.

12. Sicherheitseinrichtung nach Anspruch 9 oder 10, dadurch gekennzeichnet, daß die Sensorkammer (18) mit einem Ausdehnungselement (20) mit elektrischem Kontakt (21, 22) verbunden ist, das Ausdehnungselement (20) beim Druckanstieg durch einen Seitenaufprall über die Flüssigkeit (19) bewegbar ist und dadurch der elektrische Kontakt (21, 22) einen Stromkreis schließt, über den die Schlageinrichtung (5) aktivierbar ist.

13. Sicherheitseinrichtung nach Anspruch 12, dadurch gekennzeichnet, daß das Ausdehnungselement ein in die Sensorkammer (18) ragender und geführter Hydraulikkolben (20) ist.

14. Sicherheitseinrichtung nach einem der Ansprüche 1 bis 13, dadurch gekennzeichnet, daß mit den Mitteln (18; 24) zur Erfassung des Seitenaufpralls ein im seitlichen Kopfaufschlagbereich aufblasbares, an sich bekanntes Gaskissen, aktivierbar ist.

## Claims

1. Safety device on a motor vehicle,
having side windows (4) made of prestressed laminated safety glass incorporating an intermediate film of plastic (8),
characterised in that
means (18; 24) for detecting a side impact are provided on the motor vehicle,
mounted in the vicinity of at least one side window (4) is a percussive device (5; 23) which is adapted to be activated by the means (18; 24) for detecting the side impact and which in the event of a side impact takes the state of stress from the side window (4) by striking the latter in a defined manner resulting in breakage thereof, thereby rendering the side window (4) non-rigid for a vehicle occupant striking his head against it, according to the construction of the intermediate plastic film.

2. Safety device according to claim 1, characterised in that the percussive device (5) is mounted directly on the side window (4), in particular in a peripheral region (9) concealed by a trim section.

3. Safety device according to claim 1, characterised in that the percussive device (23) is arranged in a stationary manner inside a trim section or in a door body (2).

4. Safety device according to any of claims 1 to 3, characterised in that the percussive device (5) is a bolt-firing mechanism by means of which at least one pointed bolt piece (13) is fired at the side window (4) following activation of the percussive device (5) and ignition of a pyrotechnic charge (15).

5. Safety device according to claim 4, characterised in that the bolt piece (13) is held in a releasable manner in a metal body (11) at one end of a bore (12) directed at the side window (4) and the bolt piece (13) obturates the bore (12),
that the other end of the bore (12) is permanently sealed and
that the pyrotechnic charge (15) is set inside the bore (12).

6. Safety device according to any of claims 1 to 3, characterised in that the percussive device (23), or at least one pointed bolt piece (16) contained therein, is adapted to be mechanically triggered directly by the means for detecting the side impact (impact beam 24).

7. Safety device according to claim 6, characterised in that the bolt piece (16) releasably seals the end of at least one respective hydraulic line (25, 26) directed at the side window (4) and is fired at the side window (4) in the event that the pressure in the hydraulic line (25, 26) increases.

8. Safety device according to any of claims 1 to 7, characterised by the use of a per se known acceleration absorber as the side impact detection means.

9. Safety device according to any of claims 1 to 7, characterised in that at least one elongated, liquid-filled sensor chamber (18; impact beam 24) which extends lengthways along the side of the vehicle in a possible impact zone is fitted as the side impact detection means, and a side impact is detected via the pressure rise in the liquid (19).

10. Safety device according to claim 9, characterised in that the sensor chamber (18) is part of an impact beam (3), more particularly of an extrusion, which exhibits a specific pattern of response.

11. Safety device according to claim 9 or 10, characterised in that the sensor chamber (impact beam 24) is connected via hydraulic lines (25, 26) direct to the percussive device (23) for direct mechanical actuation.

12. Safety device according to claim 9 or 10, characterised in that the sensor chamber (18) is connected to an expansion element (20) with electric contact (21, 22), the expansion element (20) is adapted to be moved by means of the liquid (19) when a side impact produces a pressure rise, and this causes the electric contact (21, 22) to complete a circuit, whereby the percussive device (5) can be activated.

13. Safety device according to claim 12, characterised in that the expansion element is a hydraulic plunger (20) which projects and is guided into the sensor chamber (18).

14. Safety device according to any of claims 1 to 13, characterised in that with the means (18; 24) for detecting the side impact it is possible to activate a per se known gas cushion adapted to be inflated in the side head impact zone.

## Revendications

1. Dispositif de sécurité dans un véhicule automobile,
comprenant des vitres latérales (4) en verre de sécurité feuilleté trempé, dans lesquelles est incorporée une feuille intermédiaire en matière plastique (8),
caractérisé en ce qu'il est prévu, sur le véhicule automobile, un moyen (18; 24) pour la détection d'une collision de flanc,
en ce qu'il est disposé, dans la zone d'au moins une vitre latérale (4), un dispositif percuteur (5; 23) qui est activable par le moyen (18; 24) de détection de la collision de flanc et qui, en cas de collision de flanc, prend son état de contrainte sous l'effet d'un choc défini produisant une série de ruptures de la vitre latérale (4), d'où il résulte que la vitre latérale (4) devient molle, grâce à sa structure avec feuille intermédiaire en matière plastique (8), lorsqu'elle est heurtée par la tête d'un passager du véhicule.

2. Dispositif de sécurité selon la revendication 1, caractérisé en ce que le dispositif percuteur (5) est placé directement sur la vitre latérale (4), en particulier dans une région (9) de son bord masquée par un habillage.

3. Dispositif de sécurité selon la revendication 1, caractérisé en ce que le dispositif percuteur (23) est disposé en position fixe à l'intérieur d'un habillage ou dans un corps de portière (2).

4. Dispositif de sécurité selon l'une quelconque des revendications 1 à 3, caractérisé en ce que le dispositif percuteur (5) est réalisé sous forme d'appareil à cheville percutante, au moyen duquel au moins une cheville pointue (13) est projetée sur la vitre latérale (4) à la suite d'une activation du dispositif percuteur (5) ou de l'allumage d'une charge pyrotechnique (15).

5. Dispositif de sécurité selon la revendication 4, caractérisé en ce que la cheville (13) est retenue de façon amovible dans un corps métallique (11) à l'une des extrémités d'une forure (12) dirigée vers la glace latérale (4), la cheville (13) obturant cette forure (12),
en ce que l'autre extrémité de la forure (12) est fermée de manière rigide et
en ce que la charge pyrotechnique (15) est placée à l'intérieur de la forure (15).

6. Dispositif de sécurité selon l'une quelconque des revendications 1 à 3, caractérisé en ce que le dispositif percuteur (23) ou au moins une cheville pointue (16) qui y est contenu est activable mécaniquement, directement par le moyen de détection de la collision de flanc (baguette latérale de protection 24).

7. Dispositif de sécurité selon la revendication 6, caractérisé en ce que la cheville (16) obture de façon amovible l'extrémité d'au moins une conduite de fluide hydraulique (25, 26) dirigée vers la vitre latérale (4) et elle est projetée sur la vitre latérale (4) en cas d'élévation de la pression dans la conduite de fluide hydraulique (25, 26).

8. Dispositif de sécurité selon l'une quelconque des revendications 1 à 7, caractérisé en ce qu'un capteur d'accélération en soi connu est utilisé comme moyen de détection de la collision de flanc.

9. Dispositif de sécurité selon l'une quelconque des revendications 1 à 7, caractérisé en ce qu'au moins une chambre détectrice (18; baguette latérale de protection 24) de forme allongée, qui est remplie de liquide et qui s'étend en direction longitudinale sur le côté du véhicule dans une région de chocs possibles, est installée en tant que moyen pour la détection de la collision de flanc, et en ce qu'une collision de flanc est détectée par l'élévation de pression dans le liquide (19).

10. Dispositif de sécurité selon la revendication 9, caractérisé en ce que la chambre détectrice (18) fait partie d'une baguette latérale de protection (3), en particulier d'un profilé filé qui présente des caractéristiques de réponse appropriées.

11. Dispositif de sécurité selon la revendication 9 ou 10, caractérisé en ce que la chambre détectrice (baguette latérale de protection 24) est reliée directement, par des conduites de fluide hydraulique (25, 26), au dispositif percuteur (23) pour un actionnement mécanique direct de celui-ci.

12. Dispositif de sécurité selon la revendication 9 ou 10, caractérisé en ce que la chambre détectrice (18) est reliée par un élément extensible (20) à un contact électrique (21, 22), l'élément extensible (20) est déplaçable sous l'action du liquide en cas d'élévation de pression due à une collision de flanc et, en conséquence, le contact électrique (21, 22) ferme un circuit par lequel le dispositif percuteur (5) est activable.

13. Dispositif de sécurité selon la revendication 12, caractérisé en ce que l'élément extensible est un piston hydraulique (20) qui fait saillie et est guidé dans la chambre détectrice (18).

14. Dispositif de sécurité selon l'une quelconque des revendications 1 à 11, caractérisé en ce qu'un coussin à gaz en soi connu, gonflable dans la région latérale qui peut être heurtée par la tête, peut être activé par le moyen (18; 24) de détection de la collision de flanc.
